# EUROPÄISCHE PATENTSCHRIFT

(11) **EP 1 841 161 B1**
(45) Veröffentlichungstag und Bekanntmachung des Hinweises auf die Patenterteilung: **28.05.2008**
(21) Anmeldenummer: 06006790.7
(22) Anmeldetag: 30.03.2006
(51) Int. Cl.: H04L 29/06

(54) **Verfahren zur gesicherten Nutzdatenübertragung**
Method for secured transmission of payload data
Procédé pour la transmission sécurisée de données utiles

(43) Veröffentlichungstag der Anmeldung: 03.10.2007
(73) Patentinhaber: SIEMENS AKTIENGESELLSCHAFT, 80333 München (DE)
(72) Erfinder: Stach, Thomas, Dr., 1130 Wien (AT)

(56) Entgegenhaltungen:
- DE-A1- 10 337 293
- DE-A1- 10 354 947
- FR-A- 2 812 152
- US-A1- 2004 158 704
- US-A1- 2006 039 356

## Beschreibung

Die Erfindung betrifft ein Verfahren zum Übertragen von Nutzdaten zwischen einer ersten, eine Verschlüsselung verwendenden Kommunikationseinrichtung und einer zweiten Kommunikationseinrichtung.

In zeitgemäßen Kommunikationssystemen erfolgt eine Echtzeit-Sprach- oder -Videokommunikation häufig über ein oder mehrere paketorientierte, insbesondere internetprotokoll-basierte Netzwerke. Eine derartige Sprach- oder Videokommunikation wird häufig auch als VoIP (VoIP: Voice/Video over Internet Protocol) bezeichnet.

Da viele paketorientierte Netzwerke, wie zum Beispiel das Internet von sich aus keinen sicheren Schutz gegen ein Mithören durch Unbefugte bieten, ist bei VoIP-Kommunikation häufig vorgesehen, die zu übertragenen Sprach- oder Videodaten teilnehmerseitig zu verschlüsseln. In vielen, insbesondere heterogenen Kommunikationssystemen können die jeweiligen Verschlüsselungsanforderungen indes von Teilnehmer zu Teilnehmer variieren. So existieren in einem Kommunikationssystem häufig sowohl Teilnehmer, die nur unverschlüsselt kommunizieren können, als auch Teilnehmer, die verschlüsselt oder unverschlüsselt kommunizieren können, als auch Teilnehmer, die nur verschlüsselt kommunizieren können.

Eine VoIP-Kommunikation führt häufig über mehrere unterschiedliche Kommunikationsnetze. Die unterschiedlichen Kommunikationsnetze sind in der Regel durch so genannte Gateway-Einrichtungen miteinander gekoppelt, die eine Umsetzung der im Rahmen der VoIP-Kommunikation zu übertragenden Nutzdaten beim Übertritt zwischen den Kommunikationsnetzen durchführen. Derartige Umsetzungen wirken sich jedoch in der Regel nachteilig auf die übertragene Sprach- oder Videoqualität aus.

Zur Vermeidung einer derartigen Verschlechterung der Sprach-oder Videoqualität kann vorgesehen sein, zwischen den kommunizierenden Teilnehmern eine Nutzdatendirektverbindung aufzubauen, durch die Gateway-Einrichtungen zumindest logisch umgangen werden können. Ein derartiger Aufbau einer Direktverbindung ist auch als "Direct Media Connection" bekannt.

Die Druckschrift US 2004/0158704 beschreibt ein System in dem Verschlüsselungsverfahren und -fähigkeiten von den Endgeräten bestimmt werden.

Eine Direktverbindung zwischen Teilnehmern mit inkompatiblen Verschlüsselungsanforderungen und -fähigkeiten ist jedoch nicht ohne weiteres möglich.

Es ist Aufgabe der vorliegenden Erfindung ein Verfahren zum Übertragen von Nutzdaten anzugeben, das hinsichtlich der Verschlüsselungsanforderungen und -fähigkeiten der Kommunikationseinrichtungen flexibler ist.

Gelöst wird diese Aufgabe durch ein Verfahren mit den Merkmalen des Patentanspruchs 1.

Erfindungsgemäß wird zum Übertragen von Nutzdaten zwischen einer ersten, eine Verschlüsselung verwendenden Kommunikationseinrichtung und einer zweiten Kommunikationseinrichtung, durch die erste Kommunikationseinrichtung veranlasst, eine Direktverbindungsaufbaumeldung sowie eine Verschlüsselungsmeldung in Richtung zur zweiten Kommunikationseinrichtung zu übermitteln. Die Direktverbindungsaufbaumeldung wird dabei mit einer eine Verschlüsselungseinrichtung identifizierenden, ersten Direktverbindungsadresse, zum Beispiel einer IP-Adresse übermittelt. Die Verschlüsselungsmeldung wird mit einer die erste Kommunikationseinrichtung identifizierenden, zweiten Direktverbindungsadresse, zum Beispiel einer IP-Adresse übermittelt. Die erste und/oder die zweite Kommunikationseinrichtung kann zum Beispiel durch eine Endeinrichtung, einen Personal Computer, ein so genanntes IP-Telefon, eine Vermittlungseinrichtung oder eine Vermittlungseinrichtung mit angeschlossener Endeinrichtung realisiert sein. Falls an Hand der übermittelten Verschlüsselungsmeldung festgestellt wird, dass die zweite Kommunikationseinrichtung die angegebene Verschlüsselung unterstützt, wird an Hand der zweiten Direktverbindungsadresse eine Direktverbindung zwischen der zweiten und der ersten Kommunikationseinrichtung aufgebaut. Über die aufgebaute Direktverbindung werden die Nutzdaten dann verschlüsselt übertragen. Falls diese Feststellung nicht erfolgt, wird an Hand der ersten Direktverbindungsadresse eine Direktverbindung zwischen der zweiten Kommunikationseinrichtung und der Verschlüsselungseinrichtung aufgebaut. Über die aufgebaute Direktverbindung werden die Nutzdaten zur Verschlüsselungseinrichtung übertragen und von dieser verschlüsselt zur ersten Kommunikationseinrichtung weitergeleitet.

Die Erfindung erlaubt eine flexible Kommunikation zwischen Kommunikationseinrichtungen mit unterschiedlichen Verschlüsselungsanforderungen und -fähigkeiten unter vorteilhafter Nutzung von Direktverbindungen.

Das erfindungsgemäße Verfahren ist insofern rückwärtskompatibel, als die zweite Kommunikationseinrichtung, falls sie die entsprechende Verschlüsselungsfähigkeit nicht aufweist, die Verschlüsselungsmeldung nicht erkennen oder interpretieren können muss, um die zur Kommunikation mit der verschlüsselnden ersten Kommunikationseinrichtung erforderliche, erste Direktverbindungsadresse als Zieladresse zu erhalten. Da die erste, die Verschlüsselungseinrichtung identifizierende Direktverbindungsadresse in der Direktverbindungsaufbaumeldung enthalten ist, können bestehende nicht verschlüsselnde aber direktverbindungsfähige Kommunikationseinrichtungen, die die Verschlüsselungsmeldung in der Regel ignorieren, mit der Erfindung unverändert weiter genutzt werden.

Vorteilhafte Ausführungsformen und Weiterbildungen der Erfindung sind in den abhängigen Ansprüchen angegeben.

Gemäß einer vorteilhaften Ausführungsform der Erfindung kann die Übermittlung der Direktverbindungsaufbaumeldung sowie der Verschlüsselungsmeldung im Rahmen eines Aufbaus einer Erstverbindung zwischen der ersten oder zweiten Kommunikationseinrichtung erfolgen. Eine derartige Erstverbindung wird häufig auch als Master-Call bezeichnet. Als Direktverbindung kann entsprechend ein einem solchen Master-Call im Rahmen einer "Direct Media Connection" zugeordneter Slave-Call aufgebaut werden.

Die Erstverbindung kann als herkömmlicher Ruf, zum Beispiel an Hand einer Zielrufnummer, von der ersten zur zweiten Kommunikationseinrichtung aufgebaut werden. Insbesondere kann die Erstverbindung mittels einer Verbindungssteuerung aufgebaut werden und über eine oder mehrere Gateway-Einrichtungen und über verschiedene Netze verlaufen. Im Rahmen der Erstverbindung können mit der Direktverbindungsaufbaumeldung und der Verschlüsselungsmeldung für den Aufbau der Direktverbindung maßgebliche Verbindungsdaten übermittelt werden, wodurch die Kommunikationseinrichtungen die Direktverbindung unter Umgehung der Gateway-Einrichtung aufbauen können. Falls die zweite Kommunikationseinrichtung die angegebene Verschlüsselung unterstützt, kann die Direktverbindung direkt zwischen den beiden Kommunikationseinrichtungen aufgebaut werden.

Nach einer weiteren vorteilhaften Ausgestaltung des erfindungsgemäßen Verfahrens kann die Verschlüsselungseinrichtung in der Gateway-Einrichtung implementiert sein. Dies ist insofern vorteilhaft, als die Verschlüsselungseinrichtung zur Weiterleitung der Direktverbindung unmittelbar auf in der Gateway-Einrichtung vorliegende Verbindungsdaten über die Erstverbindung zugreifen kann.

Nach einer weiteren Ausgestaltung der Erfindung kann die Direktverbindung der Erstverbindung zuordnet sein, wobei die Zuordnung in der Verschlüsselungseinrichtung gespeichert wird. In diesem Fall kann die Verschlüsselungseinrichtung die erste Kommunikationseinrichtung als Endpunkt, der der Direktverbindung zugeordneten Erstverbindung ermitteln und über diese Direktverbindung eintreffende Nutzdaten an den so ermittelten Endpunkt, nämlich die erste Kommunikationseinrichtung, weiterleiten. Die Verschlüsselungseinrichtung kann in diesem Fall für die Weiterleitung der Direktverbindung wesentliche Verbindungsdaten aus Verbindungsdaten der Erstverbindung ableiten.

Vorteilhafterweise kann die Erstverbindung parallel zur Direktverbindung bestehen bleiben, so dass die übertragenden Nutzdaten bedarfsweise von der Direktverbindung zur Erstverbindung und/oder umgekehrt wechseln können.

Ein Ausführungsbeispiel der Erfindung wird nachfolgend an Hand der Zeichnung näher erläutert.

Dabei zeigen jeweils in schematischer Darstellung:
- Figur 1: ein Kommunikationssystem mit unterschiedliche Verschlüsselungsanforderungen aufweisenden Kommunikationseinrichtungen und
- Figur 2: das Kommunikationssystem bei einer Kommunikation zwischen Kommunikationseinrichtungen mit unterschiedlichen Verschlüsselungsanforderungen

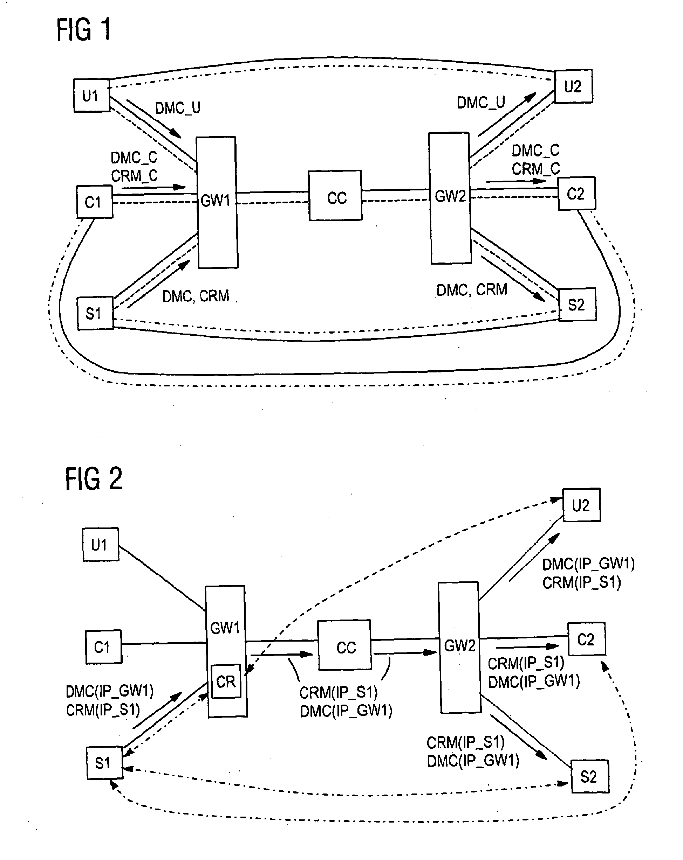

Figur 1 zeigt in schematischer Darstellung ein Kommunikationssystem mit verschiedenen Kommunikationseinrichtungen U1, C1, S1, U2, C2 und S2, die über verschiedene durch Gateways GW1 und GW2 gekoppelte Netzwerke (nicht explizit dargestellt) verbunden sind. Das Kommunikationssystem sei im vorliegenden Ausführungsbeispiel als IP-basiert (IP: Internet Protocol) angenommen. Die Kommunikationsrichtungen U1, C1, S1, U2, C2 und S2 können beispielsweise jeweils als Teilnehmerendgerät, VoIP-Telefon (VoIP: Voice/Video over IP), als Personal Computer, als Kommunikations-Client oder als eine Vermittlungsanlage, insbesondere eine so genannte PBX (Private Branch Exchange) mit angeschlossenen Teilnehmerendgeräten oder VoIP-Telefonen realisiert sein und zum Beispiel zur Sprach- oder Videokommunikation, vorzugsweise in Echtzeit vorgesehen sein. Für das vorliegende Ausführungsbeispiel sei beispielhaft angenommen, dass die Kommunikationseinrichtungen U1, C1, S1, U2, C2 und S2 zur VoIP-Echtzeit-Sprachkommunikation dienen und dementsprechend als Nutzdaten Sprachdaten zu übertragen sind.

Während die Kommunikationseinrichtungen U1, C1 und S1 an den Gateway GW1 angekoppelt sind, sind die Kommunikationseinrichtungen U2, C2 und S2 an den Gateway GW2 angekoppelt. Beide Gateways GW1 und GW2 sind an eine Rufsteuerung CC gekoppelt, die auch eine Direktverbindungssteuerung umfasst. Eine solche Rufsteuerung wird häufig auch als "Call-Control" und eine solche Direktverbindungssteuerung auch als "DMC-Control" (DMC: Direct Media Connection) bezeichnet.

Weiterhin sei angenommen, dass die Kommunikationseinrichtungen U1, C1, S1, U2, C2 und S2 unterschiedliche Verschlüsselungsanforderungen und Verschlüsselungsfähigkeiten aufweisen. Beispielhaft sei angenommen, dass die Kommunikationseinrichtungen U1 und U2 keine Sprachverschlüsselung vornehmen können, dass die Kommunikationseinrichtungen C1 und C2 sowohl verschlüsselte als auch unverschlüsselte Sprachdaten senden und empfangen können, und dass die Kommunikationseinrichtungen S1 und S2 insofern geschützt sind, als sie ausschließlich verschlüsselte Sprachdaten senden und empfangen dürfen.

Im Kommunikationssystem wird das Verfahren Direct Media Connection verwendet, um die Sprachqualität eines VoIP-Rufes zu optimieren. Im Rahmen eines solchen VoIP-Rufes werden zwei getrennte, aber miteinander korrelierte und miteinander zugeordnete Verbindungen aufgebaut, die parallel bestehen bleiben. Als Erstverbindung wird eine so genannte Master-Verbindung (Master-Call) aufgebaut, die dazu verwendet wird den VoIP-Ruf grundsätzlich aufzubauen. Durch die Master-Verbindung wird ein Aufbau der zweiten Verbindung als so genannte Slave-Verbindung (Slave-Call) veranlasst, durch die eine direkte Nutzdatenverbindung zwischen den VoIP-Verbindungspartnern hergestellt wird. Die Master-Verbindung ist vorzugsweise ein herkömmlicher Ruf, der durch eine herkömmliche Rufnummer zur jeweils gerufenen Kommunikationseinrichtung aufgebaut wird.

Figur 1 veranschaulicht einen Aufbau von Master- und Slave-Verbindungen zwischen Kommunikationseinrichtungen mit gleichen Verschlüsselungsanforderungen und -fähigkeiten, das heißt, eine Kommunikation zwischen den Kommunikationseinrichtungen U1 und U2, zwischen den Kommunikationseinrichtungen C1 und C2 bzw. eine Kommunikation zwischen den Kommunikationseinrichtungen S1 und S2.

Zum Aufbau der jeweiligen Master-Verbindung wird eine Signalisierung zwischen der Kommunikationseinrichtung U1, C1 bzw. S1 und der Kommunikationseinrichtung U2, C2 bzw. S2 über den Gateway GW1, die Rufsteuerung CC sowie den Gateway GW2 geführt. Über den gleichen Leitweg werden die Nutzdaten der Master-Verbindung geführt. Die Signalisierung ist in Figur 1 durch durchgezogene Linien, die Nutzdatenübermittlung der Master-Verbindung durch strichlierte Linien veranschaulicht. Die Rufsteuerung CC wird durch die Master-Verbindung gesteuert.

Die Netzwerkkomponenten GW1, CC und GW2 können in heterogenen Kommunikationssystemen auch mehrfach hintereinander angeordnet sein, wie zum Beispiel GW1 - CC - GW2 .... - GW(N-1) - CC(N-1) - GW(N). In der Regel erfahren die zu übertragenden Sprachdaten in mindestens einem oder allen der Transit-Gateways jeweils eine Umsetzung und/oder Umcodierung, die sich nachteilig auf die Sprachqualität auswirkt. Zur Vermeidung derartiger, ggf. mehrfacher Umsetzungen, wird bei bestehender Master-Verbindung die Slave-Verbindung parallel als Direktverbindung aufgebaut, bei der die Sprachdaten direkt zwischen der anrufenden Kommunikationseinrichtung U1, C1 bzw. S1 und der angerufenen Kommunikationseinrichtung U2, C2 bzw. S2 übertragen werden können. Um die Verbindungspartner U1 und U2, C1 und C2 bzw. S1 und S2 darüber zu informieren, wohin die jeweilige Slave-Verbindung aufzubauen ist, werden IP-Adressen der jeweiligen Verbindungspartner während des Aufbaus der Master-Verbindung ausgetauscht. Die IP-Adressen werden innerhalb von Direktverbindungs-Aufbaumeldungen, zum Beispiel so genannten DMC-Meldungen, übermittelt.

In Figur 1 übermittelt die Kommunikationseinrichtung U1 eine Direktverbindungs-Aufbaumeldung DMC_U mit ihrer IP-Adresse zur Kommunikationseinrichtung U2. Die Kommunikationseinrichtung C1 eine Direktverbindungs-Aufbaumeldung DCM_C mit ihrer IP-Adresse zur Kommunikationseinrichtung C2 und die Kommunikationseinrichtung S1 eine Direktverbindungs-Aufbaumeldung DMC mit ihrer IP-Adresse zur Kommunikationseinrichtung S2. Die Direktverbindungs-Aufbaumeldungen DMC_U, DMC_C und DMC enthalten also bei einer Kommunikation zwischen Kommunikationseinrichtungen mit gleichen Verschlüsselungsanforderungen jeweils diejenige IP-Adresse zu der der jeweilige Empfänger dieser IP-Adresse Sprachdaten direkt übermitteln kann. Derartige Direktverbindungs-Aufbaumeldungen können in der Regel sowohl von bestehenden Kommunikationseinrichtungen mit Verschlüsselung als auch von bestehenden Kommunikationseinrichtungen ohne Verschlüsselungsfähigkeiten korrekt interpretiert werden.

Im Fall der potentiell verschlüsselnden Kommunikationseinrichtungen C1 und C2 und der zwingend verschlüsselnden Kommunikationseinrichtungen S1 und S2 werden zusätzlich während des Aufbaus der Master-Verbindung Verschlüsselungsmeldungen CRM_C und CRM zwischen den jeweiligen Kommunikationspartnern übermittelt. Figur 1 veranschaulicht eine Übermittlung der Verschlüsselungsmeldung CRM_C von der Kommunikationseinrichtung C1 über den Gateway GW1, die Rufsteuerung CC und den Gateway GW2 zur Kommunikationseinrichtung C2 sowie eine Übermittlung der Verschlüsselungsmeldung CRM von der Kommunikationseinrichtung S1 über den Gateway GW1, die Rufsteuerung CC und den Gateway GW2 zur Kommunikationseinrichtung S2. Während die Verschlüsselungsmeldung CRM_C die Verschlüsselungsfähigkeiten und Verschlüsselungsanforderungen der Kommunikationseinrichtung C1 angibt, gibt die Verschlüsselungsmeldung CRM die Verschlüsselungsfähigkeiten und Verschlüsselungsanforderungen der Kommunikationseinrichtung S1 an. An Hand der Verschlüsselungsmeldung CRM_C bzw. CRM kann deren jeweiliger Empfänger feststellen, ob dessen Verschlüsselungsfähigkeiten den jeweils angegebenen Verschlüsselungsanforderungen entsprechen und falls dies der Fall ist, eine entsprechend verschlüsselte Slave-Direktverbindung aufbauen.

Die durch Figur 1 veranschaulichten Slave-Verbindungen werden unter zumindest logischer Umgehung beider Gateways GW1 und GW2 direkt zwischen den jeweiligen Kommunikationspartnern U1 und U2, C1 und C2 bzw. S1 und S2 aufgebaut. Eine derartige logische Umgehung kann z.B. mittels einer über die Gateways GW1 und/oder GW2 verlaufenden Tunnelverbindung realisiert werden, durch die eine Nutzdatenumsetzung in GW1 und/oder GW2 vermieden wird. Die Signalisierung einer jeweiligen Slave-Verbindung wird in Figur 1 durch durchgezogene Linien, die Nutzdatenübertragung durch strichpunktierte Linien veranschaulicht.

Die oben erwähnte Zuordnung einer jeweiligen Slave-Verbindung zu ihrer Master-Verbindung wird durch die Rufsteuerung CC verwaltet und in den Gateways GW1 und GW2 gespeichert.

Figur 2 zeigt in schematischer Darstellung das in Figur 1 dargestellte Kommunikationssystem bei einer Kommunikation zwischen Kommunikationseinrichtungen mit unterschiedlichen Verschlüsselungsanforderungen und Verschlüsselungsfähigkeiten. Gleichlautende Bezugszeichen haben in Figur 2 die gleiche Bedeutung wie in Figur 1.

Figur 2 veranschaulicht beispielhaft den Verlauf von Nutzdatenverbindungen, die von der nur verschlüsselt kommunizierenden Kommunikationseinrichtung S1 ausgehen.

Konkret seien im Folgenden eine erste Nutzdatenverbindung zwischen den Kommunikationseinrichtungen S1 und S2, eine zweite Nutzdatenverbindung zwischen den Kommunikationseinrichtungen S1 und C2 sowie eine dritte Nutzdatenverbindung zwischen den Kommunikationseinrichtungen S1 und U2 betrachtet. Mit den ebenfalls verschlüsselnden Kommunikationseinrichtungen C2 und S2 kann die die Kommunikationseinrichtung S1 die Nutzdaten direkt verschlüsselt austauschen. Im Falle der Nutzdatenverbindung zwischen S1 und U2 ist dies jedoch nicht ohne Weiteres möglich, weil die Kommunikationseinrichtung S2 nur verschlüsselt senden und empfangen darf, die Kommunikationseinrichtung U2 aber keine Verschlüsselungsfähigkeiten aufweist. Um dennoch eine Nutzdatenverbindung zwischen den Kommunikationseinrichtungen S1 und U2 aufzubauen, wird diese über den Gateway GW1 geführt, in den ein Verschlüsselungsmodul CR zum Ver- und Entschlüsseln von Sprachdaten integriert ist. Der Gateway GW1 fungiert mithin als Verschlüsselungseinrichtung.

Wie schon im Zusammenhang mit Figur 1 erläutert, werden zum Aufbau einer jeweiligen Nutzdatenverbindung beim Aufbau einer jeweiligen Master-Verbindung von der Kommunikationseinrichtung S1 zur Kommunikationseinrichtung S2, C2 bzw. U2 jeweils eine Direktverbindungs-Aufbaumeldung DMC sowie eine Verschlüsselungsmeldung CRM von der rufenden Kommunikationseinrichtung S1 zum jeweiligen Rufziel S2, C2 bzw. U2 übermittelt. Die aufgebauten Master-Verbindungen verlaufen entsprechend den obigen Ausführungen von der rufenden Kommunikationseinrichtung S1 über den Gateway GW1, die Rufsteuerung CC und den Gateway GW2 zum jeweiligen Anrufziel S2, C2 bzw. U2.

Erfindungsgemäß umfasst die Direktverbindungs-Aufbaumeldung DMC eine Direktverbindungsadresse IP_GW1, die den als Verschlüsselungseinrichtung fungierenden Gateway GW1 identifiziert und adressiert. Die Direktverbindungsadresse IP GW1 ist in die Direktverbindungs-Aufbaumeldung DMC wie eine den rufenden Endpunkt der aufzubauenden Direktverbindung adressierende Adresse eingefügt.

Die Verschlüsselungsmeldung CRM umfasst eine die rufende Kommunikationseinrichtung S1 identifizierende und adressierende Direktverbindungsadresse IP_S1. Vorzugsweise ist die Direktverbindungsadresse IP_GW1 eine IP-Adresse des Gateways GW1 und die Direktverbindungsadresse IP_S1 eine IP-Adresse der Kommunikationseinrichtung S1.

Vorzugsweise kann vorgesehen sein, dass die vorstehende Übermittlung zweier Direktverbindungsadressen IP_S1 und IP_GW1 nur im Falle von besonders geschützten Kommunikationseinrichtungen, wie hier der zwingend verschlüsselnden Kommunikationseinrichtung S1 veranlasst wird. Insbesondere kann vorgesehen sein, dass nicht besonders geschützte Kommunikationseinrichtungen, hier U1 und C1 eine sie selbst identifizierende Direktverbindungsadresse in einer Direktverbindungs-Aufbaumeldung beim Aufbau einer Master-Verbindung übermitteln.

Im Falle der besonders geschützten Kommunikationseinrichtung S1 wird die IP-Adresse des Gateways GW1 in die Direktverbindungs-Aufbaumeldung DMC eingetragen, weil zu Beginn des Rufaufbaus noch nicht bekannt ist, welche Verschlüsselungsfähigkeiten die jeweils gerufene Kommunikationseinrichtung S2, C2 bzw. U2 aufweist und weil der Gateway GW1 eine Ver- und Entschlüsselung gewissermaßen stellvertretend für eine nicht verschlüsselungsfähige Kommunikationseinrichtung, hier U2, vornehmen kann.

Damit die Kommunikationseinrichtung S1 aber auch verschlüsselte Direktverbindungen zu verschlüsselungsfähigen Kommunikationseinrichtungen, hier C2 und S2 aufbauen kann, wird mit der Verschlüsselungsmeldung CRM die IP-Adresse IP_S1 als zweite IP-Adresse übermittelt. Die verschlüsselungsfähigen Kommunikationseinrichtungen C2 und S2 können - anders als die Kommunikationseinrichtung U2 - die empfangene Verschlüsselungsmeldung CRM erkennen und verarbeiten.

Somit können die Kommunikationseinrichtungen C2 und S2 zunächst an Hand der Verschlüsselungsmeldung CRM jeweils prüfen, ob sie den Verschlüsselungsanforderungen der Kommunikationseinrichtung S1 genügen. Falls dies wie im vorliegenden Ausführungsbeispiel der Fall ist, können die Kommunikationseinrichtungen C2 und S2, die in der Direktverbindungs-Aufbaumeldung DMC enthaltene Direktverbindungsadresse IP_GW1 verwerfen und stattdessen, die in der Verschlüsselungsmeldung CRM enthaltene Direktverbindungsadresse IP_1 verwenden, um den Aufbau einer verschlüsselten Slave-Direktverbindung zwischen C2 und S1 bzw. S2 und S1 zu veranlassen.

Falls die Kommunikationseinrichtung C2 oder S2 an Hand der Verschlüsselungsmeldung CRM dagegen feststellen würde, dass sie den Verschlüsselungsanforderungen der Kommunikationseinrichtung S1 nicht genügte, könnte die Kommunikationseinrichtung C2 oder S2, die in der Direktverbindungs-Aufbaumeldung DMC enthaltene Direktverbindungsadresse IP_GW1 verwenden. Anhand dieser könnte eine unverschlüsselte Slave-Verbindung zu dem als Verschlüsselungseinrichtung wirkenden Gateway GW1 aufgebaut werden, der diese Slave-Verbindung in verschlüsselter Form zur Kommunikationseinrichtung S1 weiterführen könnte.

In Figur 2 sind die verschlüsselten Slave-Direktverbindungen zwischen den Kommunikationseinrichtungen S1 und S2 bzw. S1 und C2 jeweils durch strichpunktierte Doppelpfeile angedeutet. Die beiden Slave-Direktverbindungen umgehen - anders als die zu Grunde liegenden Master-Verbindungen - die Gateways GW1 und GW2 sowie die Rufsteuerung CC zumindest logisch.

Die Kommunikationseinrichtung U2 weist im vorliegenden Ausführungsbeispiel keine Verschlüsselungsfähigkeiten auf und kann infolgedessen die Verschlüsselungsmeldung CRM nicht erkennen oder interpretieren. Dagegen kann die Direktverbindungs-Aufbaumeldung DMC von der Kommunikationseinrichtung U2 erkannt und ausgewertet werden. Da in der Direktverbindungs-Aufbaumeldung DMC die IP-Adresse IP_GW1 des Gateways GW1 als Direktverbindungsadresse enthalten ist, wird diese von der Kommunikationseinrichtung U2 als Endpunkt der aufzubauenden Slave-Direktverbindung interpretiert und infolgedessen eine unverschlüsselte Slave-Direktverbindung zwischen der Kommunikationseinrichtung U2 und dem durch die IP-Adresse IP_GW1 identifizierten Gateway aufgebaut. Die unverschlüsselte Slave-Direktverbindung ist in Figur 2 durch einen strichlierten Doppelpfeil angedeutet. Diese Slave-Verbindung umgeht als Direktverbindung zumindest logisch den Gateway GW2 und ggf. weitere zwischengeschaltete Transit-Gateways und vermeidet so gegenüber Verbindungen, die alle Gateways durchlaufen, mehrfache qualitätsmindernde Umsetzungen der Sprachdaten.

Der Gateway GW1 verschlüsselt die über die Slave-Direktverbindung von der Kommunikationseinrichtung U2 eintreffenden Sprachdaten mittels des Verschlüsselungsmoduls CR und überträgt die Sprachdaten in verschlüsselter Form über eine Weiterführung der Slave-Direktverbindung vom Gateway GW1 zur Kommunikationseinrichtung S1. Die verschlüsselte Weiterführung der Slave-Direktverbindung zwischen dem Gateway GW1 und der Kommunikationseinrichtung S1 ist in Figur 2 durch einen strichpunktierten Doppelpfeil angedeutet.

Der Gateway GW1 ermittelt den eigentlichen Endpunkt, hier S1, der von der Kommunikationseinrichtung U2 eintreffenden Slave-Direktverbindung dadurch, dass die dieser Slave-Verbindung zugeordnete Master-Verbindung ermittelt wird und die Slave-Verbindung zum Endpunkt der Master-Verbindung, hier S1, weitergeführt wird.

Wie oben bereits angedeutet, ist es vorteilhaft, wenn mit der Verschlüsselungsmeldung CRM nur dann die Direktverbindungsadresse, hier IP_1, derjenigen Kommunikationseinrichtung, zu der die Slave-Verbindung aufgebaut werden soll, übermittelt wird, wenn die Übermittlung der Verschlüsselungsmeldung CRM durch eine besonders geschützte Kommunikationseinrichtung, wie S1 veranlasst wird.

## Patentansprüche

1. Verfahren zum Übertragen von Nutzdaten zwischen einer ersten, eine Verschlüsselung verwendenden Kommunikationseinrichtung (S1) und einer zweiten Kommunikationseinrichtung (U2, C2, S2), wobei
a) durch die erste Kommunikationseinrichtung (S1) veranlasst wird,
- eine Direktverbindungsaufbaumeldung (DMC) mit einer eine Verschlüsselungseinrichtung (CR, GW1) identifizierenden, ersten Direktverbindungsadresse (IP_GW1) sowie
- eine die Verschlüsselung angebende Verschlüsselungsmeldung (CRM) mit einer die erste Kommunikationseinrichtung (S1) identifizierenden, zweiten Direktverbindungsadresse (IP_S1)
in Richtung zur zweiten Kommunikationseinrichtung (U2, C2, S2) zu übermitteln,
b) falls anhand der übermittelten Verschlüsselungsmeldung (CRM) festgestellt wird, dass die zweite Kommunikationseinrichtung (U2, C2, S2) die angegebene Verschlüsselung unterstützt, anhand der zweiten Direktverbindungsadresse (IP_S1) eine Direktverbindung zwischen der zweiten und der ersten Kommunikationseinrichtung aufgebaut wird, und die Nutzdaten verschlüsselt über die aufgebaute Direktverbindung übertragen werden, und
c) falls die genannte Feststellung nicht erfolgt, anhand der ersten Direktverbindungsadresse (IP_GW1) eine Direktverbindung zwischen der zweiten Kommunikationseinrichtung (U2, C2, S2) und der Verschlüsselungseinrichtung (CR, GW1) aufgebaut wird, und die Nutzdaten über die aufgebaute Direktverbindung zur Verschlüsselungseinrichtung (CR, GW1) übertragen und von dieser verschlüsselt zur ersten Kommunikationseinrichtung (S1) weitergeleitet werden.

2. Verfahren nach Anspruch 1,
**dadurch gekennzeichnet,**
**dass** die Übermittlung der Direktverbindungsaufbaumeldung (DMC) sowie der Verschlüsselungsmeldung (CRM) im Rahmen eines Aufbaus einer Erstverbindung zwischen der ersten und der zweiten Kommunikationseinrichtung erfolgt.

3. Verfahren nach Anspruch 2,
**dadurch gekennzeichnet,**
**dass** die Erstverbindung über eine Gateway-Einrichtung (GW1, GW2) verläuft und mittels einer Verbindungssteuerung (CC) aufgebaut wird.

4. Verfahren nach Anspruch 3,
**dadurch gekennzeichnet,**
**dass** die Direktverbindung unter Umgehung der Gateway-Einrichtung (GW1, GW2) aufgebaut wird.

5. Verfahren nach Anspruch 3 oder 4,
**dadurch gekennzeichnet,**
**dass** die Verschlüsselungseinrichtung in der Gateway-Einrichtung (GW1) implementiert ist.

6. Verfahren nach einem der Ansprüche 2 bis 5,
**dadurch gekennzeichnet,**
**dass** die Direktverbindung der Erstverbindung zugeordnet wird,
**dass** die Zuordnung in der Verschlüsselungseinrichtung (CR, GW1) gespeichert wird, und
**dass** die Verschlüsselungseinrichtung (CR, GW1) die erste Kommunikationseinrichtung (S1) als Endpunkt der der Direktverbindung zugeordneten Erstverbindung ermittelt und die über diese Direktverbindung eintreffenden Nutzdaten an den so ermittelten Endpunkt (S1) weiterleitet.

7. Verfahren nach einem der Ansprüche 2 bis 6,
**dadurch gekennzeichnet,**
**dass** die Übertragung der Nutzdaten bedarfsweise von der Direktverbindung zur Erstverbindung wechselt.

8. Verfahren nach einem der Ansprüche 2 bis 7,
**dadurch gekennzeichnet,**
**dass** als Erstverbindung eine Master-Verbindung gemäß dem Direct-Media-Connection-Verfahren aufgebaut wird.

9. Verfahren nach einem der vorhergehenden Ansprüche,
**dadurch gekennzeichnet,**
**dass** als Direktverbindung eine Slave-Verbindung gemäß dem Direct-Media-Connection-Verfahren aufgebaut wird.

## Claims

1. Method for transmitting user data between a first communication device (S1), which uses encryption, and a second communication device (U2, C2, S2), whereby
a) the first communication device (S1) initiates the transfer in the direction of the second communication device (U2, C2, S2) of
- a direct connection setup message (DMC) with a first direct connection address (IP_GW1) identifying an encryption device (CR, GW1), and also
- an encryption message (CRM) specifying the encryption with a second direct connection address (IP_S1) identifying the first communication device (S1),
b) if it is determined on the basis of the transferred encryption message (CRM) that the second communication device (U2, C2, S2) supports the specified encryption, a direct connection is set up between the second and the first communication device on the basis of the second direct connection address (IP_S1), and the user data is then transmitted over the established direct connection in encrypted form, and
c) if this determination does not take place, a direct connection is set up between the second communication device (U2, C2, S2) and the encryption device (CR, GW1) on the basis of the first direct connection address (IP_GW1), and the user data is transmitted by way of the established direct connection to the encryption device (CR, GW1) and forwarded by the latter in encrypted form to the first communication device (S1).

2. Method according to claim 1,
**characterised**
**in that** the transfer of the direct connection setup message (DMC) and also of the encryption message (CRM) takes place in the context of setting up a first connection between the first and the second communication device.

3. Method according to claim 2,
**characterised**
**in that** the first connection is routed by way of a gateway facility (GW1, GW2) and is set up by means of a connection control facility (CC).

4. Method according to claim 3,
**characterised**
**in that** the direct connection is set up whilst bypassing the gateway facility (GW1, GW2).

5. Method according to claim 3 or 4,
**characterised**
**in that** the encryption device is implemented in the gateway facility (GW1).

6. Method according to one of claims 2 to 5,
**characterised**
**in that** the direct connection is assigned to the first connection,
**in that** the assignment is stored in the encryption device (CR, GW1), and
**in that** the encryption device (CR, GW1) ascertains the first communication device (S1) as the end point of the first connection assigned to the direct connection and forwards the user data arriving over this direct connection to the thus ascertained end point (S1).

7. Method according to one of claims 2 to 6,
**characterised**
**in that** the transmission of the user data switches if necessary from the direct connection to the first connection.

8. Method according to one of claims 2 to 7,
**characterised**
**in that** a master call is set up as the first connection in accordance with the direct media connection method.

9. Method according to one of the preceding claims,
**characterised**
**in that** a slave call is set up as the direct connection in accordance with the direct media connection method.

## Revendications

1. Procédé pour la transmission de données utiles entre un premier dispositif de communication (S1) utilisant un codage et un second dispositif de communication (U2, C2, S2),
a. le premier dispositif de communication (S1) incitant à transmettre
- un message d'établissement de liaison directe (DMC) avec une première adresse de liaison directe (IP_GW1) identifiant un dispositif de codage (CR, GW1) ainsi qu'
- un message de codage (CRM) indiquant le codage, avec une seconde adresse directe (IP_S1) identifiant le premier dispositif de communication (S1)
en direction allant vers le second dispositif de communication (U2, C2, S2),
b. au cas où il soit constaté à l'aide du message de codage transmis (CRM) que le second dispositif de communication (U2, C2, S2) supporte le codage indiqué, une liaison directe entre le second et le premier dispositifs de communication étant établie à l'aide de la second adresse de liaison directe (IP_S1), et les données utiles étant transmises de manière codée par l'intermédiaire de la liaison directe établie, et
c. au cas où ladite constatation n'ait pas lieu, une liaison directe entre le second dispositif de communication (U2, C2, S2) et le dispositif de codage (CR, GW1) étant établie à l'aide de la première adresse de liaison directe (IP_GW1), et les données utiles étant transmises vers le dispositif de codage (CR, GW1) par l'intermédiaire de la liaison directe établie et étant acheminées de manière codée par ce dispositif de codage vers le premier dispositif de communication (S1).

2. Procédé selon la revendication 1,
**caractérisé en ce**
**que** la transmission du message d'établissement de liaison directe (DMC) ainsi que du message de codage (CRM) est réalisée dans le cadre d'un établissement d'une liaison initiale entre le premier et le second dispositifs de communication.

3. Procédé selon la revendication 2,
**caractérisé en ce**
**que** la liaison initiale a lieu par l'intermédiaire d'un dispositif passerelle (GW1, GW2) et en ce qu'elle est établie au moyen d'une commande de liaison (CC).

4. Procédé selon la revendication 3,
**caractérisé en ce**
**que** la liaison directe est établie par contournement du dispositif passerelle (GW1, GW2).

5. Procédé selon la revendication 3 ou 4,
**caractérisé en ce**
**que** le dispositif de codage est réalisé dans le dispositif passerelle (GW1).

6. Procédé selon l'une quelconque des revendications 2 à 5,
**caractérisé en ce**
**que** la liaison directe est affectée à la liaison initiale, en ce que l'affectation est mémorisée dans le dispositif de codage (CR, GW1), et
en ce que le dispositif de codage (CR, GW1) détermine le premier dispositif de communication (S1) en tant que point terminal de la liaison initiale affectée à la liaison directe et achemine au point terminal (S1) ainsi déterminé les données utiles entrant par l'intermédiaire de cette liaison directe.

7. Procédé selon l'une quelconque des revendications 2 à 6,
**caractérisé en ce**
**que** la transmission des données utiles commute, selon les besoins, de la liaison directe vers la liaison initiale.

8. Procédé selon l'une quelconque des revendications 2 à 7,
**caractérisé en ce**
**qu'**une liaison Master selon le procédé Direct-Media-Connection est établie en tant que liaison initiale.

9. Procédé selon l'une quelconque des revendications précédentes,
**caractérisé en ce**
**qu'**une liaison Slave selon le procédé Direct-Media-Connection est établie en tant que liaison directe.
